(19) Europäisches Patentamt
European Patent Office
Office européen des brevets

(11) **EP 4 759 885 A1**

(12) **EUROPEAN PATENT APPLICATION**

(43) Date of publication:
**17.06.2026 Bulletin 2026/25**

(21) Application number: **24219678.0**

(22) Date of filing: **13.12.2024**

(51) International Patent Classification (IPC):
**C09D 5/00** *(2006.01)*

(52) Cooperative Patent Classification (CPC):
**C09D 5/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Imec VZW**
**3001 Leuven (BE)**
• **UNIVERSITEIT HASSELT**
**3500 Hasselt (BE)**

(72) Inventors:
• **SHANIVARASANTHE NITHYANANDA KUMAR,
Rachith**
**3500 Hasselt (BE)**
• **DEFERME, Wim**
**3940 Hechtelt (BE)**
• **VERDING, Pieter**
**3700 Tongeren (BE)**

(74) Representative: **AWA Sweden AB**
**Matrosgatan 1**
**Box 5117**
**200 71 Malmö (SE)**

(54) **COLD SUBSTRATE THIN FILM DEPOSITION PROCESS**

(57) A method (200) for forming a thin film (100) onto a substrate (110), said method comprising: cooling (210) of the substrate (110) to a cold substrate temperature; depositing (220) droplets (130), comprising a solvent and a solute material for forming the thin film on a surface (120) of a substrate (110') having the cold substrate temperature, wherein the droplets are having a droplet temperature equal or higher than the cold substrate temperature; allowing evaporation (230) of the solvent to form the thin film (100) onto the substrate (110'), wherein the evaporation follows an evaporative flux profile defining a higher evaporative flux in regions of the droplets having a larger thickness.

*Fig. 5*

**Description**

Technical field

The present inventive concept relates to a method for forming a thin film onto a substrate.

Background

Thin films are being increasingly used in various application fields, such as energy, heath care, space technology, optoelectronic devices etc. In particular, there is an interest in ultra-thin films (U-TFs) having a thickness in a nanometer scale, such as films being less than 100 nm or even thinner.

At present the commercially available U-TFs are fabricated using either vacuum technologies, such as thermal evaporation and sputtering, or by using precision chemical vapor deposition and atomic layer deposition for high-end application, for example in space technology. Also, the capital investment and maintenance of these vacuum deposition techniques is very high, which not only adds to the cost of the products but also limits the use of thin film products in the less privileged part of the world.

Solution processing techniques such as spin coating and inkjet printing may help to develop U-TFs, but this may only be done at lab scale and therefore scale-up is an issue with these techniques. Other solution processing techniques, such as dip-coating, slot-die coating, doctor blade coating, screen printing, spray coating or spray pyrolysis, which are roll-to-roll (R2R) compatible, still are incapable of depositing U-TFs and also suffers from additional limitations, such as the need for additional post-heat treatment to achieve thin films, which is not suitable for heat sensitive substrates. Also, they are less accurate, have imitations in the resolution, require expensive ink formulations and have restrictions on the inclination of the substrate.

Nevertheless, for thinner films, it is also increasingly difficult to produce films having a homogeneous or uniform thickness. Materials for forming thin films may be deposited on a surface using droplet-based techniques wherein deposition of small droplets of solution in which the material to be deposited on the surface is dissolved. A solvent is allowed to evaporate to leave the deposited material on the surface. However, upon the interaction of the droplet with the substrate, the droplet might form semi spherical geometrical profile, in here rate of evaporation of solvents may be higher at edges of a droplet such that a hydrodynamic fluid flow may be initiated within the droplet. Thus, a solute in the droplets is carried by the fluid flow towards the periphery of the droplets such that irregular ring-like structures known as coffee rings are formed in the deposited thin film.

Thus, there is a need for an improved technique for forming a thin film material onto substrates and thus enabling that thin films with homogeneous thickness is formed.

Summary

An objective of the present inventive concept is to enable forming of thin films having homogeneous thickness.

This and other objectives of the present inventive concept are at least partly met by the invention as defined in the independent claims. Preferred variations to the inventive concept will be evident from the dependent claims.

According to a first aspect, there is provided a method for forming a thin film onto a substrate, said method comprising: cooling of the substrate to a cold substrate temperature; depositing droplets, comprising a solvent and a solute material for forming the thin film on a surface of a substrate having the cold substrate temperature, wherein the droplets are having a droplet temperature equal or higher than the cold substrate temperature; allowing evaporation of the solvent to form the thin film onto the substrate, wherein the evaporation follows an evaporative flux profile defining a higher evaporative flux in regions of the droplets having a larger thickness.

The present inventive concept is focused on depositing droplets onto a substrate surface that is colder than or equal to the droplets. Thus, the method of the first aspect suppresses the issues with hydrodynamic flow and reduces coffee ring formation, hence yielding thin films with a homogeneous or uniform thickness. Further, the present method achieves uniform thin films in the nanometer thickness range. The present method is also compatible with various processing techniques and various materials, e.g. temperature-sensitive materials.

With the term "cooling" is meant that a lowering of the temperature such that the substrate becomes colder. Thus, with the term "cold substrate temperature" is meant the temperature that the substrate achieves after cooling, which may be around 0°C or sub-zero, i.e., less than 0°C. Thus, the cold substrate temperature is a temperature just above the freezing temperature of the solvent being used, with an upper limit just a few degrees Celsius below the droplet temperature.

With the term "droplet temperature" is meant the temperature of the droplet when it leaves a nozzle of a means that generates droplets, such as a sprayer or spraying device. Thus, the cooling of the substrate has a profound influence on the rate of evaporation of the solvent from the warmer droplets that are deposited on the cold substrate surface, i.e. in allowing of evaporation of the solvent to form the thin film onto the substrate.

With the term "depositing" is meant that the droplets are placed on the substrate by various deposition techniques which e.g. may be pressurized spray coating, ultrasonic spray coating (USSC), inkjet printing, aerosol jet printing, electrospray coating etc. The depositing droplets, comprising a solvent and a solute material for forming the thin film on a surface of a substrate does not involve vacuum deposition, nor vacuum to hold the substrate firm as is often used in alternative methods for fabrication of thin films. Thus, the present method provides a cost and energy-efficient approach for forming a thin film onto a substrate. Further, despite the method uses a step of cooling of the substrate, the method consumes little power, which may be beneficial in ensuring that fabrication of thin films is carbon neutral.

With the term "allowing of evaporation" is meant that the evaporation is not forced by external heating or application of vacuum and thus the evaporation will not be instantaneous because of the cold substrate. Further, above the freezing temperature of the solvent there is still a gradient of evaporation at the top of the droplet and the capillary force will drive the flow from the colder portion of the droplet to the warm portion of the droplet. Thus, during the evaporation it is implied that the height of the droplet will go down, but the diameter of the droplet will stay the same. The method provides a slow evaporation rate that helps the solvent to spread evenly to the maximum limit, thus ensuring that uniform films are formed. Herein, the maximum limit to which the droplet may spread over and contact the surfaces is the spreading diameter or spreading length, which is measured in micrometers.

With the term "evaporation follows an evaporative flux profile" the evaporative flux is counteracting the coffee ring effect and assuring a homogeneous evaporation such that the solvent is evaporated at all places of the droplet uniformly and approximately at the same moment. Thus, a clear effect of the present inventive method is the counter-acting against forming coffee rings.

According to an embodiment, the method further comprises controlling the evaporation of the solvent in the droplets on the surface by controlling a bulk flow of the solute material in the droplets on the surface, wherein the bulk flow is flowing from regions of the droplets having a smaller thickness to regions of the droplets having a larger thickness. Here, it should be understood that this is the reverse flow as when forming coffee rings. This also implies that a situation wherein the droplets get smaller and smaller due to this reverse flow is avoided by having a homogeneous evaporation, i.e. wherein a uniform thin film is formed. The evaporation may for example be controlled by applying different parameters, such as providing a cold substrate temperature, providing a droplet temperature, setting a droplet depositing pressure, providing a concentration in weight% (wt%) of the solute material in the solvent, setting vapor pressure, and providing a nitrogen flow, or any combination thereof.

In another embodiment, the droplets being deposited on the surface of the substrate having the cold substrate temperature are having a first region at a center of the droplets and a second region in a peripheral portion of the droplets, such that the droplets are having a larger thickness in the first region compared to the second region. For example, the first region may be a bulk region at the center of the droplets, wherein the bulk region comprises a main volume of the droplets comprising the solvent and the solute material. The second region maybe a transition region in a peripheral portion of the droplets, wherein the transition region comprises a minor volume of the droplets comprising the solvent and the solute material. This implies that wherein the solute material may be evenly distributed within the first and the second region of the droplets. The term region may also be interchangeably replaced with the term regime herein.

In another embodiment, the cooling of the substrate is provided by exposing the substrate to a cooling system, preferably the cooling system is a cold plate, liquid nitrogen or liquid helium cooling system.

Herein, the cooling of the substrate may be done by various means, and the source for reducing the temperature may be by any suitable means. For example the cooling of the substrate may be provided by arranging the substrate on a cold plate, such as a Peltier plate. The cooling of the substrate may also be by exposing the substrate to liquid nitrogen or liquid helium cooling system. By the term "exposing the substrate" to liquid nitrogen cooling system or liquid helium cooling system is meant that the substrate is not directly exposed to liquid nitrogen or helium, but the cooling system may use at least one of these liquids. Thus, the cooling of the substrate provides the advantages of making the method cost and energy-efficient, since the evaporation needs very little energy, i.e., it requires very low power.

In another embodiment, the cold substrate temperature is equal or at least about 1°C lower than the droplet temperature and at least 1 °C above the freezing temperature of the solvent.

The cold substrate temperature may be at least about 2°C lower than the droplet temperature. The cold substrate temperature may be around 0°C or below 0°C. The cold substrate temperature may be at least 1°C above the freezing temperature of the solvent being used. This implies that the cold substrate temperature may be as low as around -90°C, for instance if solvents having low freezing points are being used, such as, acetone, toluene, diethyl ether, ethanol, isopropanol, n-butanol, dichloromethane or hexane, but more convenient working temperature ranges may be around 0°C or some degrees below 0°C. Depending on the solvent being used, the cold substrate temperature may be in a range from -90°C to 30°C, preferably from -10°C to 25°C, preferably from -5°C to 25°C, preferably from -5°C to 20°C, preferably from -5°C to 15°C, preferably from -5°C to 10°C, preferably from -5°C to 5°C, preferably from -5°C to 0°C, preferably from 0°C to 20°C, preferably from 0°C to 10°C, preferably from 0°C to 5°C. Having a cold substrate temperature at room temperature or even lower temperatures around 0°C or even lower, allows for temperature-sensitive active materials to be used as substrates in the present method, such as for production of e.g. organic electronics materials.

In another embodiment, the droplet temperature is equal or at least 1°C higher than the substrate temperature, preferably the droplet temperature is at least about 1°C higher than the substrate temperature. For example, the droplet temperature may be less than 30°C, preferably the droplet temperature may be less than 25°C, preferably around 20°C. The droplet temperature may be at ambient temperature. In one embodiment the droplet temperature is at room temperature, for example in a range from 18°C to 30°C. Thus, the droplet temperature may also be less than 20°C.

As mentioned above the droplet temperature is the temperature of the droplet when it leaves the nozzle of the means that generates droplets. However, the temperature of the droplet is dependent on the solvent used and thus the droplet temperature will be different for different solvents. For example, if an acetone droplet evaporates in the flight, i.e., between the means that generates droplets and deposition on the substrate, its temperature will be less than 18°C.

Considering having a droplet temperature that is at least 1°C higher than the substrate temperature, it implies that the dew point and saturation temperature must be considered in view of the amount of solvent that is evaporating with respect to solvent being condensed on the substrate to facilitate the wetting. These terms may be explained accordingly; the dew point for a given body of air is the temperature to which the air must be cooled to, at constant pressure, in order to become saturated with water vapor, i.e., to achieve a relative humidity (RH) of 100%. Thus, this temperature depends on the pressure and water content of the air. At this point the air cannot hold more water in gas form. When the air is cooled below the dew point, its moisture capacity is reduced, and airborne water vapor will condense to form liquid water known as dew. When this occurs through the air's contact with a colder surface, dew will form on that surface. The dew point is affected by the air's humidity. The more moisture the air contains, the higher its dew point. When the temperature is below the freezing point of water, the dew point is called the frost point, as frost is formed via deposition rather than condensation. In solvents, the analog to the dew point is the cloud point. The saturation temperature is the temperature for a corresponding saturation pressure at which a solvent boil into its vapor phase. However, in theory, it is considered that as long as the temperature of the substrate is at least 1°C below the temperature of the droplet and at least 1°C above the freezing temperature of the used solvent the method of the first aspect is fulfilled.

As discussed above, the temperature allows for any type of material such as temperature-sensitive active materials of e.g. organic and perovskite electronics materials etc. Also, there is no need for vacuum evaporation that cannot deposit materials like polymer, which makes the method more versatile, economical and energy-saving.

In another embodiment, the solute material in the solvent of the droplets has a concentration in weight% in a range from 0.0001 wt% to 4 wt%, preferably in a range from 0.0001 wt% to 1 wt%, preferably in a range from 0.0001 wt% to 0.5 wt%.

The maximum concentration of solute material in the solvent of the droplets is related to the solvent's primary properties, important examples in this case may be volatility, boiling point, surface tension and viscosity, such that they are not changed. This implies that the viscosity and surface tension remain constant in view of the concentration of the solute material. For example, when using USSC deposition a maximum concentration of solute material in the solvent of the droplets may be 4 wt%. For example, for acetone-based polyvinylidene difluoride (PVDF) inks with concentrations ranging from 0 to 4.5 wt%, the dynamic viscosity increases from $3.36 \times 10^{-4}$ Pa·s to $2.15 \times 10^{-3}$ Pa s. Additionally, the surface tension varies within the range of 24.3 mN/m to 23.6 mN/m. Further, the thinner the layer that is aimed to be deposited, the lower the concentration required. For example, to achieve a thickness of 5 nm, a concentration of approximately 0.0004 wt% may be used for PEDOT:PSS and around 0.00012 wt% for PEIE.

In another embodiment, the droplets are micro-droplets, preferably having a Sauter mean diameter less than 200 $\mu$m, preferably having a Sauter mean diameter in a range from 10 $\mu$m to 500 $\mu$m, preferably from 20 $\mu$m to 200 $\mu$m, preferably about 25 $\mu$m. With the term "micro-droplets" it is meant droplets that are having a size on a microscopic scale, i.e., smaller than what can be seen by a naked eye. In other words, the droplets may be micro-droplets with the meaning that the droplets have a volume on a micrometer scale. As should be realized that if the diameter is already in $\mu$m scale the volume will be in a much smaller scale. For example a 10 $\mu$m droplet has a volume of 5.24E-16 $m^3$. It should further be realized that the forming of droplets or micro-droplets does not necessarily generate droplets that are all equally sized. Rather, there may be a distribution of sizes in the formed droplets. When discussing sizes of droplets or micro-droplets below, an average size of the micro-droplets is referred unless stated otherwise. The distribution of the droplet sizes may be dependent of the solvents that are being used. When focusing on USSC deposition the above-mentioned droplet sizes are preferred. However, in theory, both larger and smaller droplets may also be deposited in view of the choice of deposition means. Thus, the droplets may be smaller than micro-droplets, i.e., droplets having a Sauter mean diameter less than 1 $\mu$m.

In another embodiment, the solute material is any solution processable material. With the term "solution processable material" is meant a material that may be deposited by any depositing means while such material is in solution in the solvent used. In other words, a solute material is a material that may be dissolved in the solvent used for deposition. For example the solute material may be selected from the group consisting of: poly(p-phenylene vinylene) (PPV), polyvinylidene difluoride (PVDF), poly(3,4-ethylenedioxy-thiophene) polystyrene sulfonate (PEDOT:PSS), ethoxylated polyethylene-imine (PEIE) and Zinc oxide (ZnO) nanoparticles (np). However, the solute material is not limited to only polymers and semiconducting materials as presented as examples above, in theory, any solution processable material may be deposited with the present technology. Further, regarding the solute material, the present inventive method requires no phase changes or polymerization of the solute material.

In another embodiment, the solvent is any solvent that is wetting the surface, preferably the solvent is selected from the group consisting of: chloroform (CF), dichloromethane (DCM), acetone, methanol, ethanol, propanol, isopropanol (IPA), n-butanol, acetonitrile, water, ethylene glycol, ethyl acetate, butyl acetate, diethyl ether, anisole, ethoxybenzene, benzene, chlorobenzene (CB), toluene, dimethylformamide (DMF), dimethyl sulfoxide (DMSO), gamma-butyrolactone (GBL), N-methyl-2-pyrrolidone (NMP), 2-methoxyethanol, propylene carbonate, hexane, xylene, $\alpha$-terpineol, eucalyptol, d-limonene, $\beta$-pinene and L-menthone, or mixtures thereof. In preferred embodiments the solvent may be selected from the group consisting of: chloroform, acetone, methanol, isopropanol (IPA), water, ethylene glycol, chlorobenzene, toluene, dimethylformamide (DMF) and dimethyl sulfoxide (DMSO). However, any solvent that may dissolve the solute material for film formation may be used. Thus, green solvents, i.e., solvents that are considered environmentally friendly chemical solvents may be preferred, such as water, acetone, acetonitrile, methanol, ethanol, propanol, isopropanol (IPA) or butanol. Other solvents considered as green terpene solvents may also be used. Green terpene solvents may for example be $\alpha$-terpineol, eucalyptol, d-limonene, $\beta$-pinene or L-menthone.

In another embodiment, the substrate is a material having a smooth surface such that the surface roughness given as root mean square (RMS) value is less than 3 nm as measured by atomic force microscopy (AFM), preferably the RMS value is in a range from 0.5 nm to 3 nm, preferably from 0.8 nm to 2.3 nm, preferably from 1 nm to 2 nm. However, the substrate is not limited to having a smooth surface as substrates having rough surfaces may also be included. For example, substrates like copper indium gallium selenide (CIGS) solar cells have very rough surfaces, wherein the surface roughness in the range of micrometers. Nevertheless, the method according to the first aspect may still be used for forming uniform thin films on said substrate. Further, substrates like polymer thin films may be used for a thin film of PEDOT:PSS, which may act as a substrate for the above thin film layer which could be deposited according to the present method. Also in the case of using textile or paper as substrates, if there is a smoothening layer on the surface of said substrates, then ultrathin films may be deposited over it by the use of the present method. Hence, in theory, by using low surface tension solvents, the present method may even be used to deposit ultrathin films over textured substrates as well. For example, the substrate may be selected from the group consisting of: metals, such as stainless steel, aluminum, gold, silver, copper or chrome, etc.; plastics, such as thermoplastics or thermosets; ceramics, such as indium tin oxide (ITO); synthetic rubbers, such as silicon; and glass, such as silicon dioxide ($SiO_2$).

In another embodiment, the thin film being formed on the substrate (100) has an average thickness smaller than 200 nm, preferably smaller than 100 nm, preferably smaller than 50 nm, preferably smaller than 15 nm, preferably smaller than 10 nm, preferably smaller than 5 nm, preferably in the range from 4 nm to 200 nm. Thus, a very thin film with a uniform thickness may be formed on a large area of the surface of the substrate. It should be realized that the desired thickness of the thin film may depend on a desired application in which the thin film is to be formed. The method may very well be used for forming films of the solute material with a greater thickness than 50 nm, such as thin films having a thickness up to 100 nm or a thickness up to 1 $\mu$m. However, forming of large-size, uniform thin films of a very small thickness using technology that may be used in mass production is particularly difficult and for such reason it is particularly interesting to use the method for forming a thin film having a thickness smaller than 50 nm, such as smaller than 15 nm.

In another embodiment, the depositing droplets is provided by using means that generates droplets, such as by ultrasonic spray coating, pressurized spray coating, inkjet printing, aerosol jet printing, hydrodynamic printing, electrospray coating or surface acoustic wave droplet coating, preferably the depositing droplets is provided by ultrasonic spray coating. In fact, all droplet-based deposition techniques may be conceivable according to the present method, even the spray on screen technology may be used. For example, ultrasonic spray coating may preferably be used for depositing droplets, as it provides a technique for forming and depositing droplets with high accuracy, good resolution, and very high transfer rate. Thus, ultrasonic spray coating is suitable for forming and depositing of droplets. Having a high transfer rate implies that material waste is very low, such that the use of ultrasonic spray coating may be environment-friendly. Even further, ultrasonic spray coating (USSC) may be combined with the use of a screen-printing mesh, such that a novel spray-on-screen (SoS) technology is achieved. This technique enables a cost-efficient and scalable deposition of uniform ultrathin coatings below 15 nm thickness, suitable for various applications such as biomedicine, space, automotive, organic electronics, memory devices, and energy storage devices. In general, an advantage with spray coating is that the material waste is very low. The deposition does not require any post-heat treatment of the substrate. While it may be difficult to deposit ultrathin films on 3D structures by this method, this could however be solved by creating 3D masks or meshes of the required size and depositing using the method for forming thin films according to the first aspect.

In another embodiment, the method is using a technique selected from the group consisting of: roll to roll (R2R) process, roll to sheet (R2S) process and sheet to sheet (S2S) process. At least one advantage of using these techniques is that the throughput of the film formation is very high.

The method of forming a thin film material onto a substrate does not require any pre-treatment or post-treatment of the substrate, except for cooling of the substrate. This implies that temperature-sensitive substrates, i.e., substrates formed by temperature-sensitive materials or carrying structures that are temperature-sensitive, may be used. Further, it also implies that temperature-sensitive solute materials may be used and also that the thin film material is formed without requiring the substrate to be exposed to an elevated temperature that could harm a temperature-sensitive substrate and/or solute material.

According to a second aspect, there is provided a thin film formed by the method according to the first aspect. By using the method of the first aspect uniform thin films may be formed that may be applicable in various fields of technology. For example, the application may be selected from the group consisting of: light-emitting diodes (LEDs), such as organic light-emitting diodes (OLEDs), perovskite LEDs; photovoltaics (PVs), such as organic photovoltaics, perovskite; photo detectors, such as perovskite photo detectors; quantum dots, topological insulators; van der Waals heterostructures; electro-luminescent devices; micro-batteries; electrochromic devices; thermochromic devices; wear-resistant coatings; smudge resistant coatings; photothermal devices; photoresist coatings; bio-medical devices; sensors; electromechanical devices, such as micro-electromechanical devices, nano-electromechanical devices; micro-magnetics; and piezoelectric films. Hence, the solute material and the substrate may be selected to provide the desired functionality in the fields of application in which it is to be used.

According to a third aspect, there is provided a use of a thin film formed by the method according to the first aspect, wherein the application is selected from the group consisting of: light-emitting diodes (LEDs), such as organic light-emitting diodes (OLEDs), perovskite LEDs; photovoltaics (PVs), such as organic photovoltaics, perovskite; photo detectors, such as perovskite photo detectors; quantum dots, topological insulators; van der Waals heterostructures; electro-luminescent devices; micro-batteries; electrochromic devices; thermochromic devices; wear-resistant coatings; smudge resistant coatings; photothermal devices; photoresist coatings; bio-medical devices; sensors; electromechanical devices, such as micro-electromechanical devices, nano-electromechanical devices; micro-magnetics; and piezoelectric films.

In another aspect the method according to the present invention may be combined with spray on screen technology. This means that cold plate may be used together with a of a screen-printing mesh, such as a micro-structured mesh. The term "micro-structured mesh" refers to a mesh having dimensions in microscopic scale, i.e. smaller than what can be seen by a naked eye. The mesh may comprise threads arranged in a pattern for forming spacings between adjacent threads. Thus, a size of individual spacings in the mesh and a diameter of individual threads are features of the micro-structured mesh that have dimensions in the microscopic scale.

The micro-structured mesh may have dimensions that are adapted for capturing droplets or micro-droplets impinging on the micro-structured mesh and also adapted for transferring the liquid of the droplets to the surface of the substrate for forming the uniform liquid film. Thus, size of the droplets and the dimensions of the micro-structured mesh may need to be related to each other. Typically, the spacings of the micro-structured mesh should not be much larger than the size of the droplets, i.e., the micro-droplets, in order to avoid that a large proportion of the droplets pass through the mesh unaffected. However, it should be realized that once droplets are deposited on an upper surface of the micro-structured mesh, the micro-droplets formed on the micro-structured mesh will aid in capturing subsequent micro-droplets impinging on the upper surface of the micro-structured mesh so as to prevent the micro-droplets from passing through the spacings of the mesh. Thus, the spacings of the micro-structured mesh need not necessarily be smaller than the size of the micro-droplets.

The surface of the substrate may be arranged in close relation to a bottom surface of the micro-structured mesh. When the surface of the substrate is arranged close to the bottom surface of the micro-structured mesh, a plurality of individual droplets will simultaneously try to wet the surface. After the droplets or micro-droplets have been deposited and allowed to coalesce to form larger droplets. This implies that wetting of the surface of the substrate will only take place after a plurality of droplets have been formed on the micro-structured mesh so that wetting may occur simultaneously from a plurality of micro-droplets, which may facilitate forming of a uniform liquid film on the surface of the substrate by allowing evaporation of the solvent according to the present method.

Thus, at least a further advantage of using a mesh for transferring the liquid to the surface of the substrate, a forced dynamic wetting of the surface can take place instead of separate droplets being formed on the surface. This implies that a uniform layer, having uniform thickness, of the liquid from the droplets can be formed on the surface. Forced dynamic wetting implies that an external force is provided to influence flow of liquid so as to wet the surface of the substrate. This is in contrast to spontaneous wetting, where only capillary force drives the flow of liquid. The forced dynamic wetting may be provided thanks to the presence of the micro-structured mesh close to the surface of the substrate. Having a uniform layer of the liquid on the surface, evaporation of the solvent may occur with a constant evaporative flux profile over the surface, such that a uniform thin film of the solute material may be formed on the surface of the substrate. Thus, the wetting of the surface of the substrate may comprise forming a wetting area. The wetting area may have a similar diameter as the droplet that is being deposited.

Brief description of the drawings

Fig. 1 is a schematic view illustrating prior art (a) the profile of a deposited droplet, with an equilibrium contact angle ($\theta$), triple point, and the conventional evaporative flux profile, (b) coffee rings on a low surface energy substrate representing non-homogeneous deposition of a film.

Fig. 2 is a schematic view of prior art warm substrate-cold droplet, illustrating a region of an evaporating meniscus.

Fig. 3 is a schematic view of a prior art apparatus for using spray on screen (SoS) technology.

Fig. 4 is a schematic view of cold substrate-warm droplet, illustrating a region of a meniscus under lower temperature according to the first aspect.

Fig. 5 is a schematic view illustrating the method according to an embodiment.

Fig. 6 is a schematic view illustrating the method according to an embodiment.

Fig. 7 is a schematic view illustrating a) means that generates droplets; b) and c) evaporation of solvent from a droplet formed on the surface of the substrate.

Fig. 8 is a graph illustrating the wetting area vs temperature according to an embodiment.

Fig. 9 is a graph illustrating the spreading diameter vs temperature for different solvents, i.e., methanol, water, IPA, CF and CB.

Fig. 10 is showing images of a dried droplet of a solute material, i.e., ethoxylated polyethylene-imine (PEIE), from isopropanol (IPA) and methanol onto a substrate at different temperatures.

Detailed description

The above, as well as additional objects, features, and advantages of the present inventive concept, will be better understood through the following illustrative and non-limiting detailed description, with reference to the appended drawings. In the drawings like reference numerals will be used for like elements unless stated otherwise. All figures are schematic, not necessarily to scale, and generally only show parts which are necessary in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter.

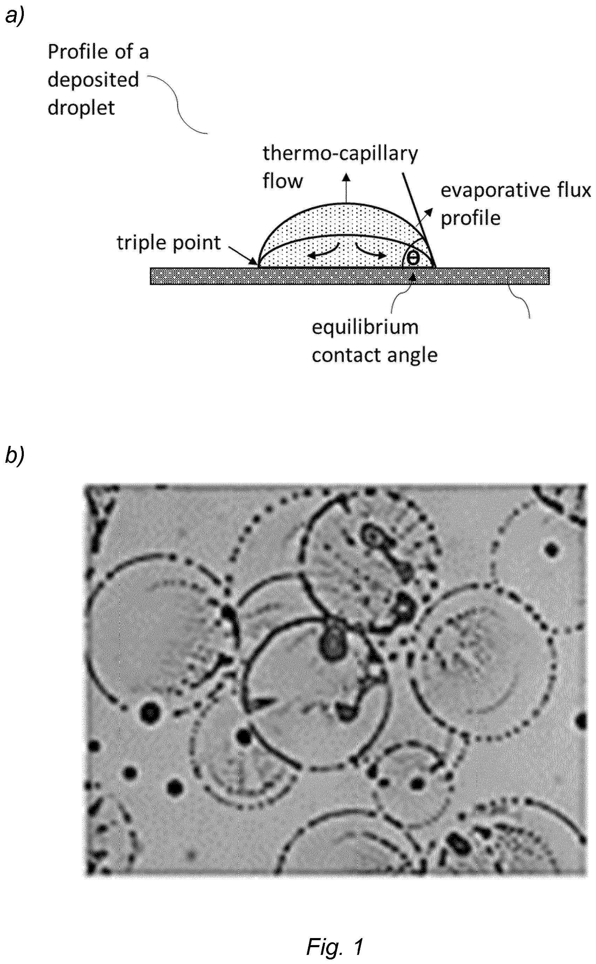

Fig. 1a illustrates the profile of a deposited droplet, with an equilibrium contact angle ($\theta$), triple point, and the conventional evaporative flux profile in the prior art. Further, fig. 1b illustrates the resulting coffee rings when cold droplets are deposited on warm substrate, thus representing non-homogeneous deposition of a film. Accordingly, to understand how the present invention solves the problem of coffee rings being formed during film formation of evaporating cold droplets deposited on a warm substrate, the underlying theory of the process of coffee rings and flow behavior in a normal cold droplet on a warm substrate is hereby explained. It is alleged that the spherical cap, which is formed upon the impact of droplets from for example ultrasonic spray coating (USSC) on a substrate, has an evaporative flux profile and a droplet shape profile with an equilibrium contact angle as shown in fig. 1a. As the flux profile coincides with the droplet shape at the edges, the rate of evaporation would be higher at this point, herein called triple point. The non-homogeneous evaporation rate over the profile of the droplet would initiate a hydrodynamic flow resulting in a fluid flow from the center of the droplet to the triple point. During the flow inside the droplet, if any solute is present, it is also carried to the triple point and forms irregular ringlike structure known as the coffee ring, as shown in fig. 1b.

Thus, the intricate dynamics between liquid surface tension and substrate surface energy hold a paramount importance in thin film formation and in particular ultra-thin film formation. When considering the behavior of droplets upon impinging the cold substrate, a crucial distinction arises based on their size relative to the capillary length. For droplets smaller than the capillary length, i.e., having a low Bond number regime, surface tension prevails over gravity, resulting in the formation of a spherical cap shape upon contact. Conversely, larger droplets, surpassing the capillary length, i.e., having a high Bond number regime, succumb to gravity, adopting a flattened, pancake-like morphology upon deposition. This consistent spherical cap shape (see fig. 1a) of micro-droplets post-impact is a characteristic of droplet-based technology, underlining the dominance of surface tension in the process. The interplay between the droplet's evaporative flux profile and its shape profile culminates at a pivotal point known as the triple point as illustrated in fig. 1a. Here, the convergence of flux and shape profiles accentuates evaporation, rendering this region a hotspot for rapid solute accumulation, manifesting as a coffee ring as illustrated in fig. 1b. Thus, the bulk flow of the solute material in the droplets on the surface may be flowing from the second region to the first region. Also, the evaporative flux may be at its maximum in the first region of the droplets having a larger thickness. The evaporation of solvent may primarily occur at a liquid-air interface of the surface of the droplets.

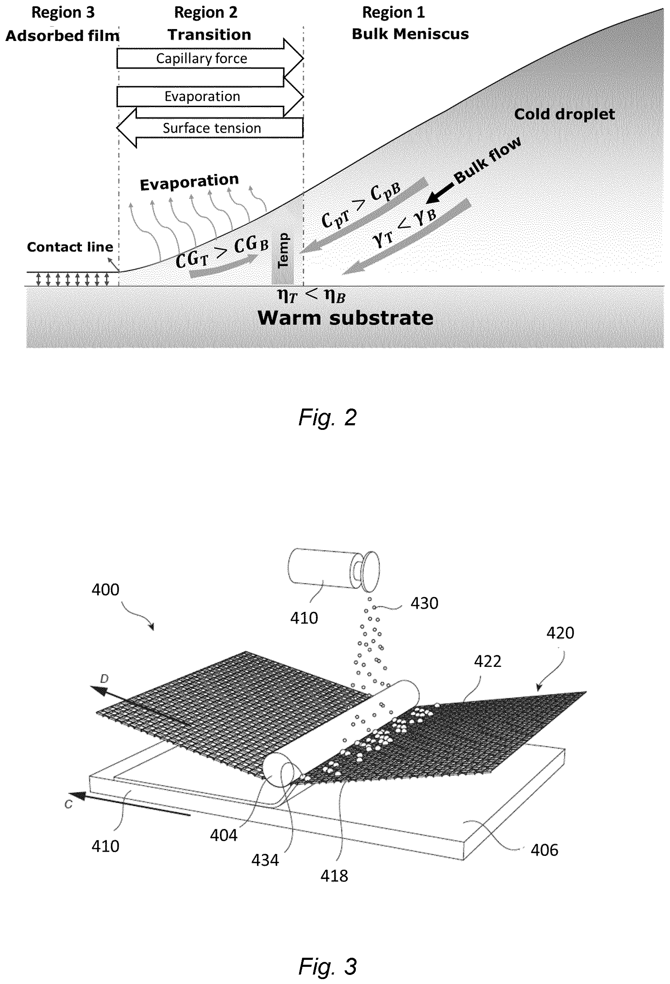

Fig. 2 illustrates a standard scenario of warm substrate and cold droplet and assuming complete wetting. The entire mechanism of thin film formation may be understood with the aid of fig. 2, showing $CG_T$ and $CG_B$ which are the concentration gradient in the transition and bulk region respectively. Further, $C_{pT}$ and $C_{pB}$ are the capillary force in transition and bulk region respectively; $\gamma_T$ and $\gamma_B$ are the surface tension in the transition and bulk region respectively; and $\eta_T$ and $\eta_B$ are the viscosity in the transition and bulk region respectively.

Region 3 in fig. 2 is showing the adsorbed/nonevaporating film region. This region is a precursor to the apparent contact line wherein solvent, vapor, and solute material meet. This region consists of a uniform film of liquid of a certain thickness. Further, this film cannot evaporate due to strong attractive forces between the solid substrate and the solvent, as well as the vapor pressure and substrate temperature. The overall thermal resistance in this region is effectively infinite because there is no evaporation occurring.

Region 2 in fig. 2 is showing the transition region. In this region, the attractive forces of the solid substrate weaken. The solvent-vapor interface develops a measurable curvature. During active evaporation, gradients in thickness and curvature of the interface drive liquid flow towards this region. Capillary and intermolecular forces contribute to this flow.

In the transition region of an evaporating meniscus, where there is a gradient in film thickness, the uniformity of the liquid film is disrupted. This non-uniformity leads to variations in capillary forces across different points within the region. Generally, capillary forces are stronger in thinner films, corresponding to smaller capillaries, and weaker in thicker films, associated with larger capillaries. As a consequence of these varying capillary forces, a flow of liquid can occur within the transition region. This flow is directed from areas where capillary forces are lower, corresponding to thicker films, towards areas with higher capillary forces, where films are thinner. The movement of liquid within the transition region is driven by the system's tendency to minimize its overall energy.

Surface tension, a measure of the cohesive forces between molecules at the surface of a liquid, can vary within a droplet, creating tension gradients. These gradients induce a phenomenon known as the Marangoni effect. The Marangoni effect drives a flow of liquid from areas of high surface tension to those of low surface tension within the droplet. Various factors can cause differences in surface tension, such as temperature variations, known as the thermocapillary effect (see fig. 1a) or concentration differences of surfactants, substances that reduce surface tension, within the droplet. The direction of flow resulting from the Marangoni effect is consistently from regions of high surface tension to regions of low surface tension. This flow can significantly impact the droplet's shape, the rate of evaporation, and other related phenomena. Further, the thermal resistance in this region reaches a minimum. The comparatively thin liquid film thickness imposes a moderate conduction resistance, but the film thickness is large enough so that the interfacial resistance decreases rapidly as the film thickens. Thus, the evaporation is maximum in this regime.

Region 1 in fig. 2 is showing the bulk fluid or meniscus region. This region constitutes the bulk of the liquid or the main body of the meniscus. The curvature of the liquid-vapor interface in this region becomes nearly constant. It acts as a reservoir supplying liquid to the transition region. The slope of the vapor-liquid interface at the beginning of this region defines the contact angle, typically reported in studies (see fig. 1a). Further, the thermal resistance in this region can be very high due to a large conduction resistance through the relatively thick liquid film.

Presently, coffee rings may be avoided by customized surface treatment and/or by addition of surfactants to the liquid being deposited. However, sensitive substrates and multi stack layers, such as substrates used in bio-technology, solar cells, organic light emitting diodes (OLEDs), etc., does not appreciate surface heat treatment, due to that the material of the substrate will degrade, or adherence of any surfactants, due to that these will react with the substrate underneath. Thus, there is a need for an improved technique for forming a thin film material onto substrates and thus enabling that thin films with homogeneous thickness is formed.

With multi stack layers means that the chemistry of a layer, which make up the surface of the substrate, is different than the layer being deposited onto said layer, thus forming a stack of layers when multiple layers are being deposited.

To overcome the problem with coffee rings without e.g. having to use additives, such as surfactants, the present inventors have earlier explored a coating technology known as spray on screen (SoS), which is illustrated in fig. 3. This technique combines the deposition technology of spray coating with screen printing, i.e., depositing micro-droplets 430 generated by ultra sonic spray coating over a hydrophobic mesh 420 of the screen from a screen printer. A substrate 410 is provided in form of a web that may be continuously transported past a position for applying thin film material onto the upper surface 406 of the substrate 410, which also has a lower surface 418. A direction of movement of the mesh 420 of the substrate 410 is indicated by arrow C and the mesh 420 is also provided in form of a web that may be transported continuously along a path above the substrate 410 in the position for applying thin film material onto the upper surface 406 of the substrate 410. A direction of movement of the web of the mesh 420 is also indicated by arrow D. The generated micro-droplets 430 on the screen coalesce to form larger droplets 434, i.e., milli-droplets, and depending on the surface tension of the droplets, these micro-droplets, either droop down the substrate 410, achieving complete wetting, or hangs over the mesh 420, achieving partial wetting, of the substrate surface 406. Irrespective of the type of solvents, these milli-droplets upon touching the substrate underneath with the help of an external pressure, by e.g. a roller 404, to the mesh 420, completely spreads over the substrate due to dynamic wetting and creates ultra-thin films after releasing the mesh 420 from substrate 410. Although showing promising results, this technology also faces some problems. For example, at least one problem with the use of screens is that the cleaning of the screen determines the quality of the thin films, i.e., clogged meshes after multiple experiments would result in irregular deposition of milli-droplets onto the substrate. Also, the wetting properties of the mesh, its opening geometry, thread counts determine the quality of the formed U-TFs deposited by the SoS technology.

Therefore, to overcome the difficulties with SoS, it was desirable to be able to create ultra-thin films of materials of interest without the need of using a mesh. In the quest for achieving U-TFs through spray coating, there exists three regimes in which deposition of the layer takes place, dry regime, wet regime and optimized regime. Both In the wet regimes and in the dry regimes there's a natural limitation imposed by the phenomenon of coffee rings and the flow behavior of the deposited liquid, which is heavily influenced by the properties of the solvent, which ends up depositing non uniform thin film over given area. The thickness of a deposited film is not solely determined by the liquid properties; it is intricately linked to factors such as substrate surface energy and temperature. This interplay between the droplets and the substrate, encompassing both chemical and mechanical interactions, delineates the boundaries for attainable thickness. For instance, when depositing droplets onto a temperature-sensitive, low surface energy substrate, the result often manifests as coffee rings rather than a uniform thin film. Therefore, in the present invention a crucial factor which determines the U-TF formation, i.e., temperature, is studied, and the present application shows that with subzero (°C) temperature, irrespective of substrate surface energy, it is possible to eliminate coffee rings and restrict hydrodynamic flow behavior which are responsible for the conventionally irregular deposition of the U-TFs.

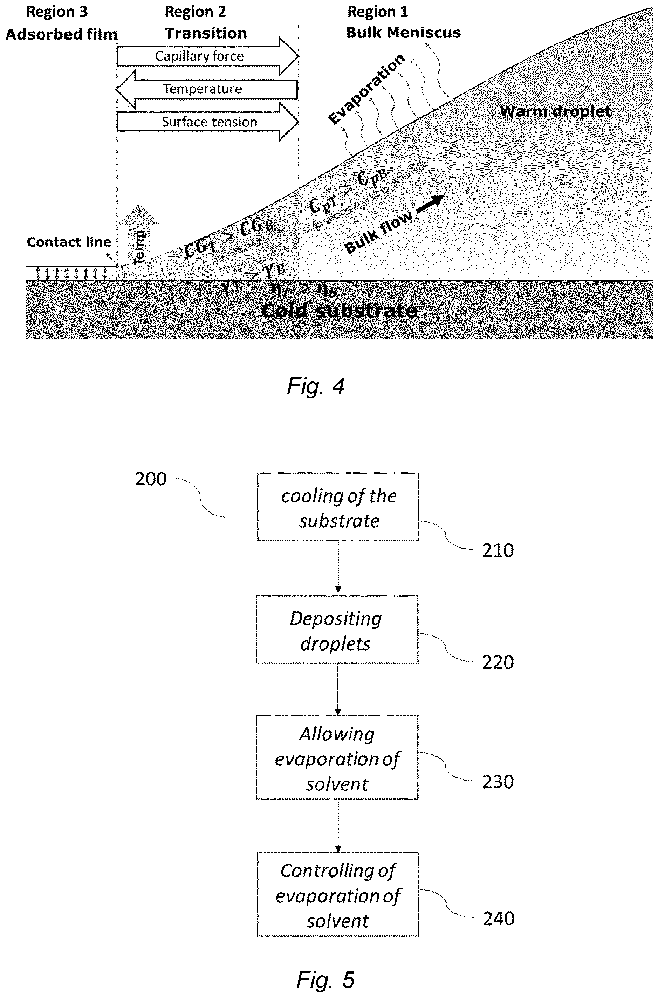

Hence, fig. 4 illustrates the theory behind the present inventive concept utilizing cold substrate and warm droplets. According to the present inventive concept, the transition region, i.e. region 2 in fig. 4, wherein the droplet is in contact with the substrate, is colder due to heat transfer. This leads to an increase in surface tension and viscosity, which hinders evaporation and reduces mobility. The bulk of the droplet, away from the plate, is warmer and has lower surface tension (see fig. 4). The gradient in surface tension would indeed drive a flow from the transition region, having high surface tension, to the bulk, having low surface tension. This is due to the Marangoni effect, which describes fluid flow driven by a surface tension gradient. However, the curvature of the transition region introduces flow due to gradient in the capillary forces. Hence there is a competing force acting which might be assisting in forming the thin films. Hence, the effect of concentration gradient and surface tension will tend to have flow from transition region to a bulk region, i.e. region 1 in fig. 4. Also, there is an increased viscosity compared to the bulk region that will resist this flow. Due to curvature, the capillary force gradient will force the liquid to move from bulk to transition region. The net force which determines the direction of the flow may be defined by the following formula:

$$\text{Concentration gradient} + \text{surface tension} = \text{viscosity} + \text{capillary force.}$$

In a conventional case of cold droplets on a warm substrate, as illustrated in fig. 2, upon evaporation from the transition regime, the evaporation of solvents results in an increase in concentration of the solute materials. However, in the method of the first aspect, if the temperature is sufficiently low, then there is no evaporation and/or there is very minimal evaporation of the solvent in the transition regime. This may result in having the same concentration per unit area in both the transition as well as bulk regime. Thus making the concentration gradient redundant. Surface tension indeed increases in the transition regime, due to low temperature with respect to the bulk. In the beginning of the process, there is a tendency of the materials to flow from higher surface tension region to the lower surface tension region. But as the time proceeds and when the temperature is uniform everywhere, there is no surface tension gradient. Further, the viscosity increases significantly as the temperature is reduced. This has direct influence on the mobility of the materials. In the transition region, the temperature is lower and hence the viscosity is higher also in the bulk region where the material (solution) is directly on the cold substrate, i.e., in the vertical direction, $x=0$, the temperature will be as low as the transition regime, due to heat transfer and hence the mobility of the solution directly on the substrate will be reduced significantly. However, at $x>0$, i.e., as the thickness of the bulk regime increases this viscosity effect reduces and hence mobility will be modified accordingly. Herein, $x$ is related to the thickness of the droplet such that, $x=0$ is the substrate surface before the droplet is deposited and $x>0$ when the droplet is deposited on the surface.

When considering the capillary forces, this force results due to change in surface tension as well as the density of the solution at lower temperature. For example, at low temperatures, the density of the solution increases as well as the surface tension of the solution, in this condition the capillary flow is increased from the bulk region to the transition region. Thus, to achieve equilibrium there is a balancing force acting between, surface tension, concentration gradient, capillary force and viscous force acting as a resistance for the fluid flow in the droplet.

However, the evaporation which primarily occurs at the liquid-air interface, which is warmer, in the present case of a droplet, this is the top surface and the sides of the droplet, away from the transition region. This rate of evaporation can be influenced by factors such as temperature, partial pressure, vapor pressure, and nitrogen flow. If the droplet is evaporating in the bulk region, the transition region will indeed move towards center while continuously involving the balancing act between all the forces. And hence leaves behind a thin film with the adsorbed region, i.e. region 3 in fig. 4, remains relatively constant. The disjoining pressure for an adsorbed film which plays a role in region 3 is inversely proportional to the cube of thickness of the wet film, i.e., thinner the film, the more disjoining pressure.

Accordingly, the method of the first aspect is focused on depositing droplets onto a substrate surface that is colder than the droplets. Thus, the method of the first aspect overcomes issues with hydrodynamic flow and reduces coffee ring formation, hence yielding thin films with a homogeneous thickness.

Accordingly, the method provides means for controlling evaporation of the solvent in the droplets on the surface by controlling a bulk flow of the solute material in the droplets on the surface, wherein the bulk flow is flowing from regions of the droplets having a smaller thickness to regions of the droplets having a larger thickness as illustrated in fig. 4. As related above, it should be understood that this is the reverse flow as when forming coffee rings. Also illustrated in fig. 4, the droplets being deposited on the surface of the substrate having a cold substrate temperature may have a first region at a center of the droplets and a second region in a peripheral portion of the droplets, such that the droplets are having a larger thickness in the first region compared to the second region. Thus, the first region may be a bulk region or bulk meniscus at the center of the droplets, wherein the bulk region comprises a main volume of the droplets comprising the solvent and the solute material. The second region maybe a transition region in a peripheral portion of the droplets, wherein the transition region comprises a minor volume of the droplets comprising the solvent and the solute material. This implies that the solute material may be evenly distributed within the first and the second region of the droplets. This implies that the transition region may be, in general, where the triple point pinning takes place, and that is where maximum evaporation takes place. Meanwhile, the bulk region starts after the transition region. The change of concentration of solute in the droplet during evaporation of solvent may be accordingly; If the substrate is warm and the droplet is cold, the transition region is where maximum evaporation takes place. This results in a difference in the solute concentration. However, in the present case, the theory is that the maximum evaporation is taking place in the bulk region, and the flow behaviors are determined by the balancing forces in the transition region and the bulk region, if the evaporation is higher in bulk. the concentration density is not high then even though the evaporation is low in the transition region, the more solute concentration pulls the solvent towards the transition region.

In other words, the method may provide a solution to the problem of being able to form uniform thin films, thus advancing the thin film industries. This is for example because there is no restriction on the area being deposited, hence the uniform deposition of U-TFs at large areas becomes easier. Also, as no vacuum is needed in the present method, as compared to vacuum deposition, the present invention becomes an energy and cost-efficient deposition process. The method only needs cooling of a substrate, which consumes very little power, thereby reaching carbon neutral standards set by the United Nations. Since the deposition does not require any post-heat treatment of the substrate, temperature-sensitive substrates may be used, which for example is highly recommended for temperature-sensitive active materials of organic electronics materials. Further, since the transfer rate is very high in USSC, the material waste is very low. Even further, in contrast to USSC, the present method may deposit thin films whose thickness is lower than 15 nm over a large area. The present method is R2R, R2S and S2S compatible and hence throughput of the film formation is very high.

Referring now to Figs 5-7, a method 200 for forming a thin film 100 onto a substrate 110 will be described.

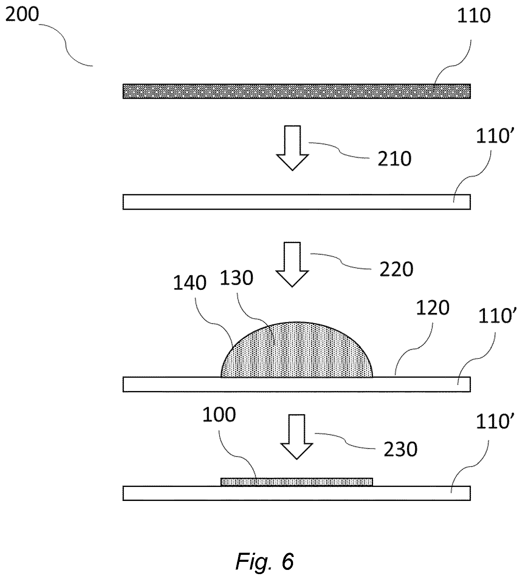

Figs 5 and 6 illustrates a method 200, which comprises cooling 210 of the substrate 110 to a cold substrate temperature, wherein the cooling 210 of the substrate 120 may be provided by exposing the substrate 110 to a cooling system, thus a substrate 110' having a cold substrate temperature is provided. The cooling system may be a cold plate, such as a Peltier plate, a liquid nitrogen or liquid helium cooling system (not illustrated herein).

Further, illustrated in fig. 6, the method 200 comprises depositing 220 droplets 130 on a surface 120 of a substrate 110' having the cold substrate temperature. The droplets 130, which may have a spherical cap shape 140, are comprising a solvent and a solute material for forming the thin film 100. The droplets being deposited on the surface of the substrate having the cold substrate temperature may also have first region at a center of the droplets and a second region in a peripheral portion of the droplets, such that the droplets are having a larger thickness in the first region compared to the second region. For example, the first region may be a bulk region at the center of the droplets, wherein the bulk region comprises a main volume of the droplets comprising the solvent and the solute material. The second region maybe a transition region in a peripheral portion of the droplets, wherein the transition region comprises a minor volume of the droplets comprising the solvent and the solute material. This implies that wherein the solute material may be evenly distributed within the first and the second region of the droplets. Further, the droplets are having a droplet temperature equal or higher than the cold substrate temperature. Preferably the droplet temperature may be at least about 1°C higher than the substrate temperature. Conversely, the cold substrate temperature of the substrate 110' may be equal or at least about 1°C lower than the droplet temperature and at least 1°C above the freezing temperature of the solvent. In table 1 the freezing temperatures of some solvents that may be used in the present method are presented.

Table 1. Solvents and their freezing temperatures in degrees Celsius

| Solvent | Freezing point (°C) |
|---------|---------------------|
| water | 0 |

(continued)

| Solvent | Freezing point (°C) |
|---|---|
| ethylene glycol | -12.9 |
| methanol | -97.68 |
| ethanol | -114.6 |
| acetonitrile | -43.3 |
| acetone | -94.8 |
| isopropanol | -89.5 |
| ethyl acetate | -83 |
| butyl acetate | -73.5 |
| anisole | -37 |
| ethoxybenzene, | -33 |
| benzene, | 5.5 |
| chlorobenzene | -45.58 |
| dichloromethane | -96.7 |
| chloroform | -63.5 |
| toluene | -94.99 |
| dimethylformamide (DMF) | -61 |
| dimethyl sulfoxide (DMSO) | 18.5 |
| gamma-butyrolactone (GBL) | -44 |
| N-methyl-2-pyrrolidone (NMP) | -23 |
| 2-methoxyethanol | -85 |
| propylene carbonate | -55 |
| diethyl ether | -193.58 |
| hexane | -95.3 |
| n-butanol | -89.8 |
| xylene | -25.1 |
| $\alpha$-terpineol | 18 |
| eucalyptol | 1.5 |
| d-limonene | 75 |
| $\beta$-pinene | -78.7 |
| L-menthone | -9.6 |

The theory that as long as the temperature of the substrate is at least 1°C below the temperature of the droplet and at least 1°C above the freezing temperature of the used solvent has for example been proven for water. Experiments where tests were conducted at 1°C confirmed this observation. For other solvents, the experiments demonstrated that cooling the surface significantly, to e.g. -10°C, improves the quality of the layer.

The droplets 130 may be micro-droplets and thus may have a Sauter mean diameter less than 200 $\mu$m, or may have a Sauter mean diameter in a range from 10 $\mu$m to 500 $\mu$m, preferably in a range from 20 $\mu$m to 200 $\mu$m. the droplets may preferably have Sauter mean diameter of about 25 $\mu$m.

Further, the method 200 comprises allowing evaporation 230 of the solvent to form the thin film 100 onto the substrate 110'. As shown in fig. 6, droplets having a spherical cap 140 due to surface tension will have a bulk flow of the solute material in the droplets on the surface that may be flowing from the second region to the first region. The evaporation follows an evaporative flux profile defining a higher evaporative flux in regions of the droplets having a larger thickness. In other words, the evaporative flux may be at its maximum in the first region of the droplets having a larger thickness. Hence, the evaporation 230 of solvent may primarily occur at a liquid-air interface of the surface of the droplets, leading to uniform thin films 100.

As illustrated in fig. 5, the method 200 may further comprise controlling 240 the evaporation of the solvent in the droplets on the surface by controlling a bulk flow of the solute material in the droplets on the surface, wherein the bulk flow is flowing from regions of the droplets having a smaller thickness to regions of the droplets having a larger thickness. Hence, this implies that it is the reverse flow as when forming coffee rings, thus leading to uniform thin films 100. The evaporation may for example be controlled by applying different parameters, such as providing a cold substrate temperature, providing a droplet temperature, setting a droplet depositing pressure, providing a concentration in weight% (wt%) of the solute material in the solvent, setting vapor pressure, and providing a nitrogen flow, or any combination thereof. For example, the droplet deposition pressure may primarily be controlled by a flow of nitrogen. While the amount of liquid deposited (flow rate) is also important, it does not directly influence the evaporation process but rather affects the volume that needs to evaporate. Further, the nitrogen flow also influences the volume of the droplet deposited on the substrate, for example, if the droplet from the nozzle is having a size of 25 micrometer, then the nitrogen pressure determines the droplet size when it hits the substrate. Forced convection forces the droplets in flight to evaporate and form a droplet with less diameter when it reaches the substrate.

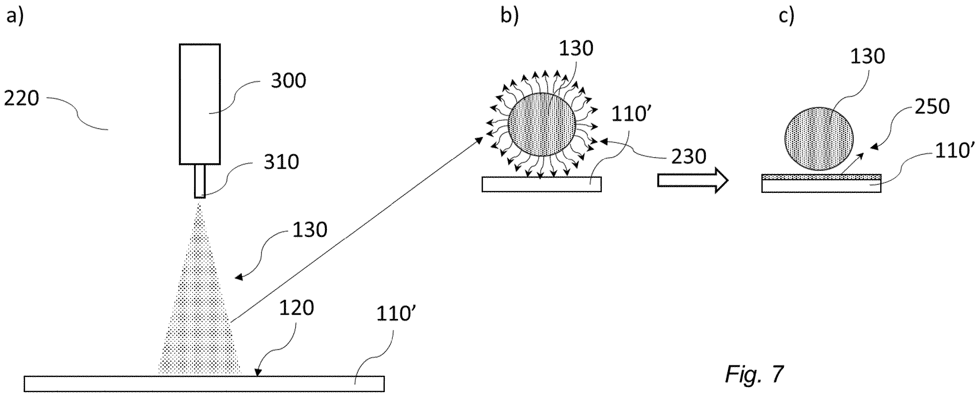

Fig. 7a illustrates that the depositing 220 droplets 130 may be provided by means 300 that generates droplets 130. For instance, the droplets 130 may be deposited using ultrasonic spray coating, pressurized spray coating, inkjet printing, aerosol jet printing, hydrodynamic printing, electrospray coating or surface acoustic wave droplet coating. Preferably the depositing 220 droplets 130 may be by ultrasonic spray coating (USSC), which may involve utilizing vibrations in ultrasonic range, such as 20-180 kHz, inside a nozzle 310 to atomize small droplets that are output from the nozzle 310. A flow of a carrier gas, such as nitrogen, may be provided for forcing the droplets 130 to impinge on a surface 120 of the substrate 110' having a cold substrate temperature. Further, the droplets 130 are having a droplet temperature that is set by the means 300 that generates droplets 130. Thus, the droplet temperature is the temperature the droplets 130 are having when they leave the nozzle 310. Further, the ultrasonic vibrations may be produced by mechanical expansion and contraction of piezoelectric transducer(s) inside the nozzle. A frequency of the ultrasonic vibrations may control a size of the micro-droplets, such that higher frequencies may be used for generating smaller micro-droplets.

Fig. 7b illustrates when the droplets 130 approach surface 120 of the cold substrate 110', the evaporation of solvent from the surface of the droplets may give off vapors of solvent. Fig. 7c illustrates that the vapors may be condensed on the substrate because of the low temperature. The already condensed solvent on the substrate may increase the wetting of the incoming droplets.

It should be realized that USSC is not necessarily used for forming and depositing of the droplets 130 on the substrate 110'. According to alternatives, other spray coating techniques or other techniques of generating droplets 130 or micro-droplets and forcing the droplets or micro-droplets onto the substrate 110' may be used.

USSC is advantageous in that USSC provides a capability of forming homogeneous micro-droplets having a size smaller than 100 μm. Further, velocity of the droplets 130 towards the substrate 110' may be easily controlled by controlling a pressure of the carrier gas. This may reduce singularity which may exist for other spray coating technologies, i.e., velocity and/or temperature-induced droplet interaction with the substrate 110'.

The solvent may be any liquid that is suitable for carrying the solute material and for wetting a surface of the substrate 110'. The solvent to be used may be selected based on the solute material to be used and on the surface of the substrate 110' as well as on a surface tension of the liquid. For instance, water or isopropanol (IPA) may be used as a solvent, but it should be realized that other solvents may be used instead.

The solute material is to be used for forming a thin film 100 on the surface of the substrate 110. Thus, the solute material may be selected based on the material desired for forming the thin film. The solute material may thus be dependent on an application of the substrate with the thin film formed thereon. The thin film may be used to provide a functionality to a device in many different fields of application, such as for organic photo-voltaic devices, organic light-emitting diodes, micro-batteries, wear-resistant coatings, bio-medical devices, micro-electro-mechanical systems, piezoelectric films, etc. Hence, the solute material may be selected to provide the desired functionality in the fields of application in which it is to be used.

The solute material may typically be a polymer which is suitable for forming a thin film. For instance, the solute material may be poly(3,4-ethylenedioxythiophene) polystyrene sulfonate (PEDOT:PSS), which may be used with water as solvent and may for instance be used in organic electronics providing low sheet resistance and optical transparency, or 80% ethoxylated polyethyleneimine (PEIE), which may be used with IPA as a solvent and may for instance be deposited on an indium tin oxide (ITO) electrode for providing low dark current and high detectivity of a photodetector.

The substrate may typically be a material having a smooth surface such that the surface roughness may be given as a root mean square (RMS) value which may be less than 3 nm as measured by atomic force microscopy (AFM). The RMS value is typically dependent on which substrate that is being used for a specific application. For substrates having smooth surfaces Thus, the RMS value may be in a range from 0.5 nm to 3 nm, preferably from 0.8 nm to 2.3 nm, preferably from 1 nm to 2 nm. The samples substrates used for confirming the method according to the first aspect typically were polished, and the supplier claimed a roughness of 0.5 nm, as measured using AFM. Depending on the desired application the substrate may for example be selected from the group consisting of: metals, such as stainless steel, aluminum, copper or chrome; plastics; ceramics, such as indium tin oxide (ITO); and glass, such as silicon dioxide ($SiO_2$). Other materials with a rougher surface, such as fabrics and papers, may also be used as substrates for droplet deposition.

The diameter of the droplets 130 formed by the droplet generator 300 may be smaller than a capillary length of the solvent, such as at least a factor 10 times smaller than the capillary length of the solvent. The size and shape of the droplets 130 when impinging on the substrate 110' affect wetting of the surface of the substrate 110'. The droplets may be microdroplets and the diameter may be given as a Sauter mean diameter less than 200 $\mu$m or smaller than 50 $\mu$m. However, the droplet generator 300 may provide droplets having a Sauter mean diameter in a range from 10 $\mu$m to 500 $\mu$m, or in a range from 20 $\mu$m to 200 $\mu$m. Preferably the droplets formed by the droplet generator may be about 25 $\mu$m.

The method of forming a thin film onto a substrate may be made roll-to-roll compatible, which implies that a very high throughput of thin film formation may be provided.

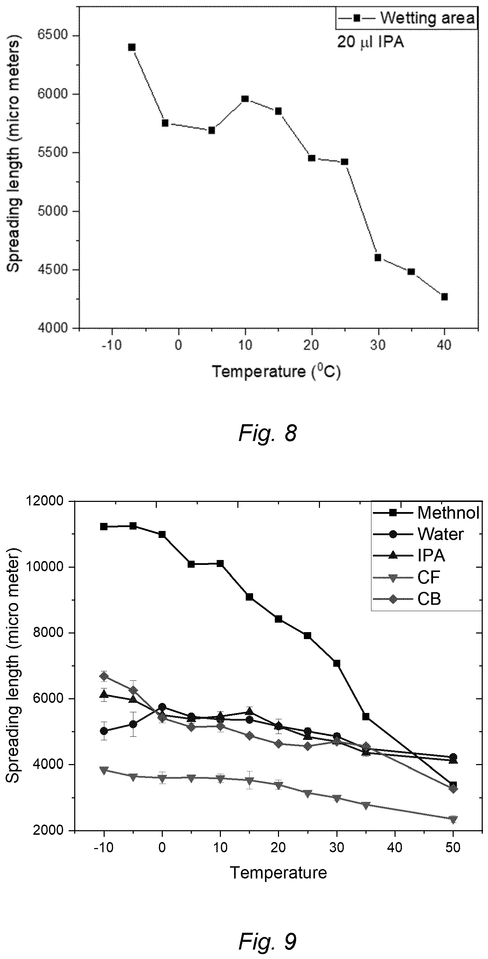

Referring now to fig. 8, is showing the wetting area of the surface of the substrate vs temperature for 2 $\mu$L droplets having IPA as solvent. As shown in fig. 8, the wetting area increases as the temperature decreases.

Fig. 9 also shows the spreading diameter in micrometer ($\mu$m) plotted against temperature in degree Celsius (°C) for various solvents, i.e., methanol, water, isopropanol (IPA), chloroform (CF) and chlorobenzene (CB), thus, indicating that a slow evaporation rate helps the solvent to spread to the maximum limit. Atomic force measurements were performed to measure the surface morphology of the deposited films.

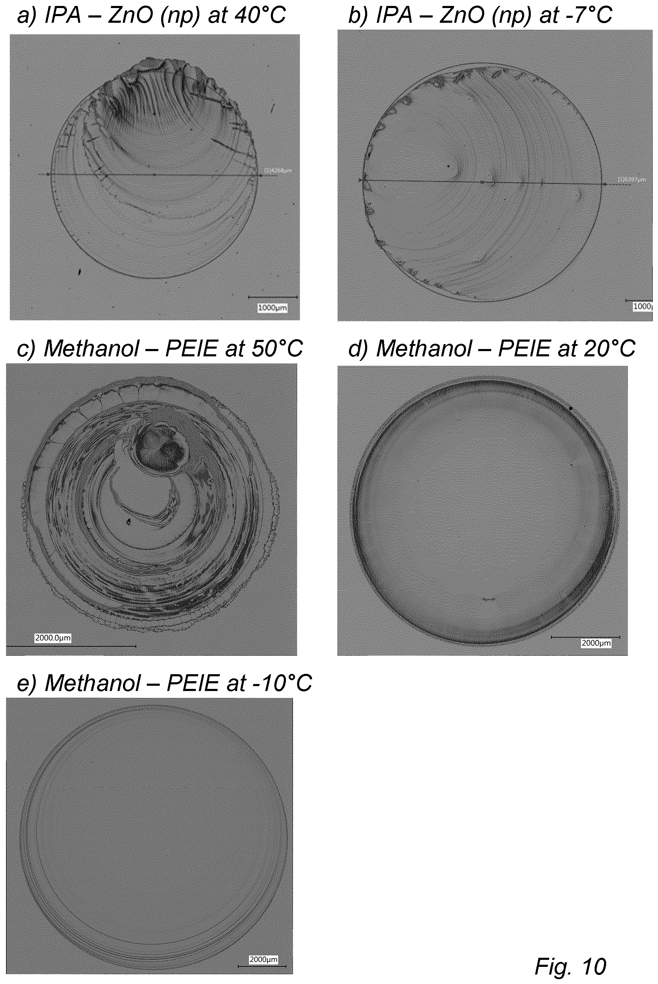

Further, referring to fig. 10a-e, this figure is showing images, made by a Keyence Microscope, of a dried droplet of a solute material, from IPA and methanol, respectively, onto a substrate and evaporated at different temperatures. Fig. 10a and 10b are showing a dried droplet of ZnO nanoparticles (np) evaporated at 40°C and -7°C, respectively, on the surface of the substrate for 2$\mu$L droplets having IPA as solvent. Similarly, the images of fig. 10c-e are showing a dried droplet of ethoxylated polyethylene-imine (PEIE) evaporated at 50°C, 20°C and -10°C, respectively, on the surface of the substrate for 2$\mu$L droplets having methanol as solvent. Accordingly, from the images, in fig. 10a, 10c and 10d, the coffee ring effect may clearly be seen compared to when decreasing the temperature of the substrate to below 0°C, as shown in fig. 10b and 10e, more uniform thin films are being formed. Hence, providing proof of the present inventive concept.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A method (200) for forming a thin film (100) onto a substrate (110), said method comprising:

   cooling (210) of the substrate (110) to a cold substrate temperature;
   depositing (220) droplets (130), comprising a solvent and a solute material for forming the thin film on a surface (120) of a substrate (110') having the cold substrate temperature, wherein the droplets are having a droplet temperature equal or higher than the cold substrate temperature;
   allowing evaporation (230) of the solvent to form the thin film (100) onto the substrate (110'), wherein the evaporation follows an evaporative flux profile defining a higher evaporative flux in regions of the droplets having a larger thickness.

2. The method (200) according to claim 1, further comprising controlling (240) the evaporation of the solvent in the droplets on the surface by controlling a bulk flow of the solute material in the droplets on the surface, wherein the bulk flow is flowing from regions of the droplets having a smaller thickness to regions of the droplets having a larger thickness.

3. The method (200) according to claim 1 or claim 2, wherein the droplets being deposited on the surface of the substrate having the cold substrate temperature are having a first region at a center of the droplets and a second region in a peripheral portion of the droplets, such that the droplets are having a larger thickness in the first region compared to the second region.

4. The method (200) according to any one of the preceding claims, wherein the cooling of the substrate is provided by exposing the substrate to a cooling system, preferably the cooling system is a cold plate, liquid nitrogen or liquid helium cooling system.

5. The method (200) according to any one of the preceding claims, wherein the cold substrate temperature is equal or at least about 1°C lower than the droplet temperature and at least 1°C above the freezing temperature of the solvent.

6. The method (200) according to any one of the preceding claims, wherein the droplet temperature is equal or at least 1°C higher than the substrate temperature, preferably the droplet temperature is less than 30°C.

7. The method (200) according to any one of the preceding claims, wherein the solute material in the solvent of the droplets has a concentration in weight% in a range from 0.0001 wt% to 4 wt%, preferably in a range from 0.0001 wt% to 1 wt%, preferably in a range from 0.0001 wt% to 0.5 wt%.

8. The method (200) according to any one of the preceding claims, wherein the droplets are micro-droplets, preferably having a Sauter mean diameter less than 200 $\mu$m, preferably having a Sauter mean diameter in a range from 10 $\mu$m to 500 $\mu$m, preferably from 20 $\mu$m to 200 $\mu$m, preferably about 25 $\mu$m.

9. The method (200) according to any one of the preceding claims, wherein the solute material is any solution processable material, preferably the solute material is selected from the group consisting of: poly(p-phenylene vinylene) (PPV), polyvinylidene difluoride (PVDF), poly(3,4-ethylenedioxythiophene) polystyrene sulfonate (PEDOT:PSS), ethoxylated polyethyleneimine (PEIE) and ZnO nanoparticles.

10. The method (200) according to any one of the preceding claims, wherein the solvent is any solvent that is wetting the surface, preferably the solvent is selected from the group consisting of: chloroform, dichloromethane, acetone, methanol, ethanol, propanol, isopropanol, n-butanol, acetonitrile, water, ethylene glycol, ethyl acetate, butyl acetate, diethyl ether, anisole, ethoxybenzene, benzene, chlorobenzene, toluene, dimethylformamide, dimethyl sulfoxide, gamma-butyrolactone, N-methyl-2-pyrrolidone (NMP), 2-methoxyethanol, propylene carbonate, hexane, xylene, $\alpha$-terpineol, eucalyptol, d-limonene, $\beta$-pinene and L-menthone, or mixtures thereof..

11. The method (200) according to any one of the preceding claims, wherein the substrate is a material having a smooth surface such that the surface roughness given as root mean square (RMS) value is less than 3 nm as measured by atomic force microscopy, preferably the RMS value is in a range from 0.5 nm to 3 nm, preferably from 0.8 nm to 2.3 nm, preferably from 1 nm to 2 nm, preferably the substrate is selected from the group consisting of: metals, such as stainless steel, aluminum, gold, silver, copper or chrome; plastics, such as thermoplastics or thermosets; ceramics, such as indium tin oxide (ITO); synthetic rubbers, such as silicon; and glass, such as silicon dioxide ($SiO_2$).

12. The method (200) according to any one of the preceding claims, wherein the thin film being formed on the substrate (100) has an average thickness smaller than 200 nm, preferably smaller than 100 nm, preferably smaller than 50 nm, preferably smaller than 15 nm, preferably smaller than 10 nm, preferably smaller than 5 nm, preferably in the range from 4 nm to 200 nm

13. The method (200) according to any one of the preceding claims, wherein the depositing (220) droplets (130) is provided by using means (300) that generates droplets, such as by ultrasonic spray coating, pressurized spray coating, inkjet printing, aerosol jet printing, hydrodynamic printing, electrospray coating or surface acoustic wave droplet coating, preferably the depositing droplets is provided by ultrasonic spray coating.

14. The method (200) according to any one of the preceding claims, wherein the method is using a technique selected from the group consisting of: roll to roll (R2R) process, roll to sheet (R2S) process and sheet to sheet (S2S) process.

15. A thin film formed by the method according to any one of claims 1 to 15.

*a)*

Profile of a
deposited
droplet

*b)*

*Fig. 1*

*Fig. 2*

*Fig. 3*

*Fig. 4*

*Fig. 5*

*Fig. 6*

*Fig. 7*

EP 4 759 885 A1

*Fig. 8*

*Fig. 9*

### a) IPA – ZnO (np) at 40°C

### b) IPA – ZnO (np) at -7°C

### c) Methanol – PEIE at 50°C

### d) Methanol – PEIE at 20°C

### e) Methanol – PEIE at -10°C

*Fig. 10*

## EUROPEAN SEARCH REPORT

**Application Number**

EP 24 21 9678

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/281029 A1 (HONDA KAZUYOSHI [JP] ET AL) 17 November 2011 (2011-11-17)<br>* paragraph [0012] - paragraph [0018] *<br>* paragraph [0039] - paragraph [0042] *<br>* paragraph [0106] - paragraph [0109] *<br>* abstract; claims 1-9; examples 1, 2 * | 1-15 | INV.<br>C09D5/00 |
| X | US 5 980 975 A (NOMURA FUMIYASU [JP] ET AL) 9 November 1999 (1999-11-09)<br>* column 22, line 17 - column 23, line 34 *<br>* abstract; claims 1-29; examples 1-3 * | 1-15 | |
| X | CN 101 803 054 A (KWANGJU INST SCI & TECH) 11 August 2010 (2010-08-11)<br>* abstract; claims 1-20; figures 1-8 * | 1-15 | |
| X | US 10 164 135 B2 (VEERASAMY VIJAYEN S [US]; GUARDIAN GLASS LLC [US]) 25 December 2018 (2018-12-25)<br>* column 9, line 27 - column 10, line 22 *<br>* abstract; claims 1-5; figures 1-15 * | 1-15 | |

**TECHNICAL FIELDS SEARCHED (IPC)**

C09D

The present search report has been drawn up for all claims

| Place of search | Date of completion of the search | Examiner |
|---|---|---|
| Munich | 30 July 2025 | Glomm, Bernhard |

EPO FORM 1503 03.82 (P04C01)

## ANNEX TO THE EUROPEAN SEARCH REPORT
## ON EUROPEAN PATENT APPLICATION NO.

EP 24 21 9678

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | | Publication date | Patent family member(s) | | Publication date |
|---|---|---|---|---|---|
| US 2011281029 | A1 | 17-11-2011 | CN | 102245800 A | 16-11-2011 |
| | | | JP | 4562811 B2 | 13-10-2010 |
| | | | JP | WO2010067603 A1 | 17-05-2012 |
| | | | US | 2011281029 A1 | 17-11-2011 |
| | | | WO | 2010067603 A1 | 17-06-2010 |
| US 5980975 | A | 09-11-1999 | AT | E204616 T1 | 15-09-2001 |
| | | | CN | 1130407 A | 04-09-1996 |
| | | | DE | 69522295 T2 | 18-04-2002 |
| | | | EP | 0712942 A1 | 22-05-1996 |
| | | | KR | 960704084 A | 31-08-1996 |
| | | | TW | 334480 B | 21-06-1998 |
| | | | US | 5980975 A | 09-11-1999 |
| | | | WO | 9533081 A1 | 07-12-1995 |
| CN 101803054 | A | 11-08-2010 | CN | 101803054 A | 11-08-2010 |
| | | | EP | 2191523 A2 | 02-06-2010 |
| | | | JP | 5149389 B2 | 20-02-2013 |
| | | | JP | 2010539726 A | 16-12-2010 |
| | | | KR | 20090029675 A | 23-03-2009 |
| | | | US | 2010193034 A1 | 05-08-2010 |
| | | | US | 2015072465 A1 | 12-03-2015 |
| | | | WO | 2009038369 A2 | 26-03-2009 |
| US 10164135 | B2 | 25-12-2018 | BR | 112012002653 A2 | 02-02-2021 |
| | | | CN | 102656702 A | 05-09-2012 |
| | | | EP | 2462624 A2 | 13-06-2012 |
| | | | JP | 2013502049 A | 17-01-2013 |
| | | | KR | 20120093814 A | 23-08-2012 |
| | | | KR | 20160108601 A | 19-09-2016 |
| | | | KR | 20170096239 A | 23-08-2017 |
| | | | KR | 20180056806 A | 29-05-2018 |
| | | | PL | 2462624 T3 | 30-11-2018 |
| | | | RU | 2012108590 A | 20-09-2013 |
| | | | TW | 201133906 A | 01-10-2011 |
| | | | TW | 201603191 A | 16-01-2016 |
| | | | US | 2011030772 A1 | 10-02-2011 |
| | | | WO | 2011016832 A2 | 10-02-2011 |

EPO FORM P0459

For more details about this annex : see Official Journal of the European Patent Office, No. 12/82